(19) Europäisches Patentamt
European Patent Office
Office européen des brevets

(11) **EP 1 705 086 B1**

(12) **EUROPÄISCHE PATENTSCHRIFT**

(45) Veröffentlichungstag und Bekanntmachung des Hinweises auf die Patenterteilung:
**10.09.2008 Patentblatt 2008/37**

(51) Int Cl.:
***B60S 1/08*** *(2006.01)*

(21) Anmeldenummer: **06005607.4**

(22) Anmeldetag: **20.03.2006**

(54) **Optoelektronische Sensoreinrichtung für ein Kraftfahrzeug**

Optoelectronic sensor device for a motor vehicle

Dispositif de détection opto-électronique pour véhicule automobile

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **22.03.2005 DE 102005013021**

(43) Veröffentlichungstag der Anmeldung:
**27.09.2006 Patentblatt 2006/39**

(73) Patentinhaber: **Leopold Kostal GmbH & Co. KG**
**58507 Lüdenscheid (DE)**

(72) Erfinder:
• **Richwin, Matthias, Dr.**
**44139 Dortmund (DE)**
• **Weber, Thomas**
**58513 Lüdenscheid (DE)**

(56) Entgegenhaltungen:
**EP-A- 0 893 317        EP-A- 1 334 890**

• **PATENT ABSTRACTS OF JAPAN Bd. 012, Nr. 002 (P-652), 7. Januar 1988 (1988-01-07) -& JP 62 163949 A (SHARP CORP), 20. Juli 1987 (1987-07-20)**

**Beschreibung**

Die Erfindung betrifft eine optoelektronische Sensoreinrichtung für ein Kraftfahrzeug zur Detektion von salzhaltiger Feuchtigkeit auf einer Kraftfahrzeugscheibe.

Das Dokument PATENT ABSTRACTS OF JAPAN Bd. 012, Nr. 002 (P-652), 7. Januar 1988 (1988-01-07) -& JP 62 163949 A (SHARP CORP), 20. Juli 1987 (1987-07-20) zeigt eine optoelektronische Sensoreinrichtung für ein Kraftfahrzeug zur Detektion von Feuchtigkeit auf einer Kraftfahrzeugscheibe, mit einer Kraftfahrzeugscheibe, mit einem Sender und einem Empfänger für optische Strahlung, welche von der Kraftfahrzeugscheibe in Richtung auf den Empfänger reflektiert wird und mit einem Koppelelement zur Ein- und Auskopplung der optischen Strahlung in die Kraftfahrzeugscheibe.

Eine durch einen Lichtsender, einen Lichtempfänger, Koppelelemente und Fahrzeugscheibe gebildete erste Lichtstrecke ist zur Detektion von Feuchtigkeit auf der Fahrzeugscheibe vorgesehen. Hierzu ist für eine Kraftfahrzeugscheibe mit einem Brechungsindexwert von 1,47 ein möglicher Einstrahlungswinkelbereich von 42,9° bis 64,8° angegeben. Darüber hinaus ist eine zweite Lichtstrecke mit einem größeren Einstrahlungswinkel (ab 64,8°) dargestellt, bei der Licht auch bei einer Benetzung der Fahrzeugscheibe ohne Lichtauskopplung total reflektiert wird, und die daher als Referenzstrecke zum Intensitätsvergleich mit der ersten Lichtstrecke geeignet ist.

Bei winterlichen Straßenverhältnissen kommt es zu Hochspritzen von Salzwasser von der Fahrbahnoberfläche. Die üblichen Wischersysteme in Kraftfahrzeugen sind nicht in der Lage, diese Salzlösung rückstandsfrei von der Scheibe zu entfernen. Es bleiben Schlieren auf der Scheibe, die abtrocknen und einen optisch diffusen Salzfilm erzeugen. Im Winter ist es also vorteilhaft, das Wischersystem bei gleicher Wassermenge auf der Kraftfahrzeugscheibe seltener zu benutzen als zu anderen Jahreszeiten. Einer Schlierenbildung seitens eines Regensensors vorzubeugen, ist ausgesprochen komplex, da sich die Schlieren erst nach dem Wischvorgang und einer Trocknungsperiode zeigen.

Es stellte sich die Aufgabe, eine optische Sensoranordnung zu schaffen, die Feuchtigkeit auf einer Fahrzeugscheibe erkennen kann, welche gelöstes Salz enthält.

Diese Aufgabe wird erfindungsgemäß durch die Merkmalskombination des Anspruchs 1 gelöst.

Bisher bekannte Sensoren zur Detektion von Salzlösungen nutzen speziell die Änderung von elektrischen Eigenschaften durch die Salzlösung und sind beispielsweise als Widerstandssensoren oder als kapazitive Sensoren ausgeführt.

Die hier dargestellte Erfindung löst das vorgenannte Problem, indem sie sich die unterschiedlichen Brechungsindizes von reinem Wasser und Salzlösungen zu Nutze macht. Durch die Detektion einer Salzlösung auf der Scheibe eines Kraftfahrzeugs kann beispielsweise die Wischfrequenz der Scheibenwischer angepaßt und damit eine Schlierenbildung auf der Scheibe verringert werden.

Im folgenden wird ein Ausführungsbeispiel der Erfindung anhand der Zeichnung dargestellt und näher erläutert.

Es zeigen

Figur 1     eine schematische Darstellung einer optoelektronische Sensoreinrichtung,

Figur 2     unterschiedlich wirkende Winkelbereiche beim Einstrahlen von optischer Strahlung in eine Kraftfahrzeugscheibe.

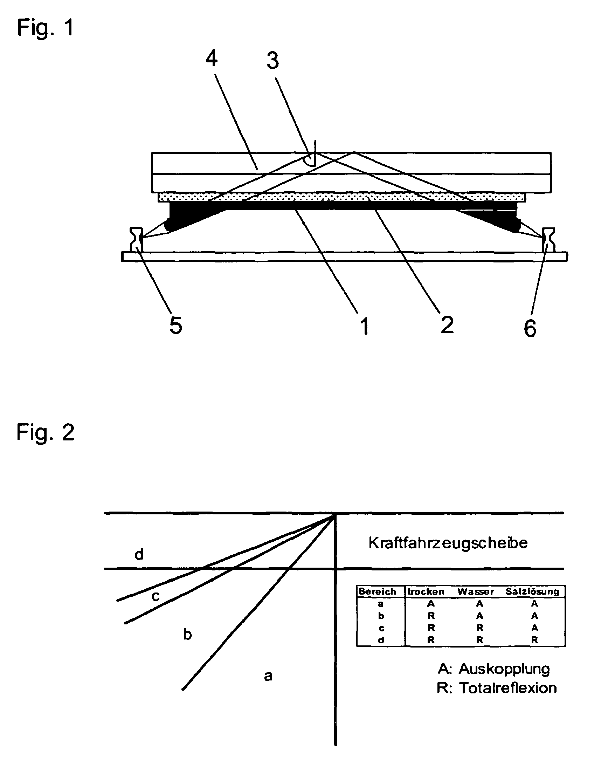

Der schematische Aufbau eines optoelektronischen Sensors ist in der Figur 1 skizziert. Der Sensor basiert auf dem Prinzip der internen Totalreflexion von Licht, das unter einem definierten Winkel in die Fahrzeugscheibe des Fahrzeugs eingekoppelt wird. Die Totalreflexion findet dabei an der Scheibenaußenseite statt, an der es bei trockener Scheibe einen Übergang Glas-Luft gibt; bei benetzter Scheibe findet an dem Übergang Glas-Flüssigkeit keine Totalreflexion statt, da der Unterschied im Brechungsindex zu gering ist.

Bisher bekannte optoelektronische Feuchtigkeitssensoren sind so ausgelegt, daß sie auf eine Benetzung der Fahrzeugscheibe mit Regenwasser, also auf Wasser mit einem nur geringen Anteil an gelösten Stoffen, ansprechen. Die optische Strahlung wird hierbei in das Wasser eingekoppelt, verläßt damit den optischen Strahlengang und wird vom Empfänger nicht mehr detektiert.

Der erfindungsgemäße optoelektronische Sensor reagiert dagegen speziell auf Feuchtigkeit mit einem nicht vernachlässigbaren Gehalt an gelösten Salzen, speziell an Natriumchlorid (Nacl). Wie nachfolgend gezeigt wird, erfordert ein solcher Sensor eine speziell ausgeführte optische Anordnung, die sich insbesondere durch den Einstrahlungswinkel der Strahlung in die Fahrzeugscheibe von einem üblichen Feuchtigkeitssensor unterscheidet.

Das allgemeine Funktionsprinzip eines optoelektronischen Sensors sei nachfolgend beschrieben. Die interne Totalreflexion findet am Übergang vom optisch dichteren zum dünneren Medium statt. Der Grenzwinkel der Totalreflexion $\beta_c$ ist gegeben durch die Brechungsindizes des inneren Mediums $n_i$ und äußeren Mediums $n_a$:

$$\sin \beta_c = n_a / n_i.$$

Das innere Medium ist das Glas der Fahrzeugscheibe, dessen Brechungsindex vereinfacht zu $n_i = 1,50$ angenommen wird. Bei trockener Fahrzeugscheibe ist das äußere Medium Luft ($n_a = 1$), und der Grenzwinkel der Totalreflexion ist 41,8°, d. h. Strahlung, die unter einem Winkel von mehr als 41,8° zum Lot auf die Grenzfläche trifft, wird bei trockener Scheibe totalreflektiert.

Bei einer mit Regenwasser benetzten Scheibe ist der äußere Brechungsindex der von Wasser (vereinfacht $n_a = 1,33$), und die Totalreflexion setzt bei Winkeln größer 62,5° ein. Zur Regenerkennung soll jedoch bei benetzter Scheibe gerade keine Totalreflexion stattfinden. Diese Überlegungen ergeben für einen Regen detektierenden Sensor ein funktionales Fenster von 41,8° bis 62,5° für den Einstrahlungswinkel auf die Scheibenebene.

Ein solcher Sensor reagiert dabei ebenfalls auf eine Benetzung der Fahrzeugscheibe mit salzhaltigem Wasser; er vermag allerdings nicht zwischen einer Benetzung mit salzhaltigem und mit im wesentlichen reinen Wasser zu unterscheiden. Eine solche Unterscheidung ist aber von Vorteil, um eine optimale Funktionsweise bei einer durch den Sensor gesteuerten Scheibenwischervorrichtung oder Scheibenwaschanlage zu erzielen.

Zur Enteisung von Straßenoberflächen wird hauptsächlich Stein- oder Siedesalz eingesetzt, das im Wesentlichen aus Natriumchlorid (NaCl) besteht. Dieses wird in fester Form ausgebracht oder als Sole versprüht. Für besonders tiefe Temperaturen wird auch Kalziumchlorid ($CaCl_2$) verwendet, was aber eine untergeordnete Bedeutung hat. Bezüglich der folgenden Betrachtungen zum Brechungsindex wird daher von NaCl ausgegangen. Für die nachfolgende Abschätzung wird überdies die Abhängigkeit der Brechungsindizes von der Wellenlänge der verwendeten optischen Strahlung vernachlässigt.

Der Brechungsindex n von reinem Wasser knapp oberhalb von 0 °C beträgt ca. 1,329. Die relative Änderung des Brechungsindexes durch Veränderung der Konzentration c des gelösten NaCl läßt sich beschreiben durch

$$\Delta n \approx \frac{\partial n}{\partial c} \Delta c \, ,$$

wenn man Temperatur, Druck und Wellenlänge konstant hält. Die Konzentration wird hier definiert als Massenkonzentration

$$c = \frac{m_{NaCl}}{m_{H_2O} + m_{NaCl}} \, .$$

Für NaCl gilt $\partial n / \partial c = 0,178$. Die maximale Konzentration liegt bei ca. 26 Massenprozenten. Damit ergibt sich ein Bereich des Brechungsindex von Kochsalzlösungen nahe 0°C von ca. 1,329 bis 1,375. Der Brechungsindex von festem NaCl ist n = 1,544.

Hinsichtlich des Zusammenhangs zwischen Einstrahlungswinkel einer optischen Strahlung und der Totalreflexion an der Kraftfahrzeugscheibe ergeben sich damit vier unterschiedlich wirkende Winkelbereiche, die in der Figur 2 skizziert sind:

| | |
|---|---|
| Bereich a | von 0° bis ca. 41,8° zum Scheibenlot. Hier findet keine Totalreflexion statt. |
| Bereich b | von ca. 41,8° bis ca. 62,3° zum Scheibenlot. Totalreflexion findet nur bei trockener Scheibe statt. Jegliche Benetzung mit Wasser oder einer Salzlösung koppelt Licht aus. |
| Bereich c | von ca. 62,3° bis ca. 66,5° zum Scheibenlot. Totalreflexion findet bei trockener Scheibe und bei Benetzung mit reinem Wasser statt. Nur bei Benetzung mit einer Salzlösung findet Auskopplung statt. |
| Bereich d | von ca. 66,5° bis 90° zum Scheibenlot. Hier findet immer Totalreflexion statt. |

Der konkret gewählte Einstrahlungswinkel im Bereich c bestimmt dabei die minimal notwendige Salzkonzentration, bei der Auskopplung stattfindet. Bei einem Winkel nur knapp oberhalb von 62,3° genügt eine geringe Salzkonzentration, bei einem Winkel knapp unterhalb von 66,5° muss eine hohe Salzkonzentration vorliegen.

Beim Abtrocknen der Salzlösung auf der Kraftfahrzeugscheibe steigt die Konzentration der Salzlösung monoton an, so daß auf jeden Fall ein Bereich hoher Salzkonzentration erreicht wird.

Festes Natriumchlorid auf der Kraftfahrzeugscheibe bewirkt eine vollständige Unterdrückung der Totalreflexion, da sein Brechungsindex größer ist als der von Glas, sofern sich kein Luftspalt zwischen dem Glas und den NaCl-Kristalliten bildet. Aufgrund der allgemein rauhen Oberfläche der Salzschicht wird das Licht gestreut, so daß die Intensität am Empfänger der optischen Strecke stark zurückgeht.

Der erfindungsgemäße optoelektronische Sensor besitzt mindestens eine optische Strecke, dessen Einstrahlungswinkel im oben genannten Bereich c liegt, also zwischen ca. 62,3° bis ca. 66,5°, gemessen zum Scheibenlot beträgt, so daß er zur Erkennung einer salzhaltigen Flüssigkeit auf der Fahrzeugscheibe geeignet ist.

Besonders vorteilhaft ist es, den erfindungsgemäßen Sensor zusammen mit einem weiteren Sensor anzuordnen, der auf bekannte Weise salzfreies Wasser auf der Fahrzeugscheibe registriert. Zusammenwirkend wird so jede Art von Benetzung erkannt und gleichzeitig eine Unterscheidung von salzfreier und salzhaltiger Feuchtigkeit möglich.

Ein derart kombinierter Sensor kann auf einfache Weise realisiert werden, indem dieser nebeneinander zwei optischen Strecken mit unterschiedlichen Einstrahlungswinkeln aufweist. Hierbei weist die optische Strecke zur Regenerkennung einen Einstrahlungswinkel aus dem oben genannten Winkelbereich b (41,8° bis ca. 62,3°) auf, während der Einstrahlungswinkel für die zur Salzerkennung geeigneten optische Strecke aus dem Winkelbereich c (62,3° bis ca. 66,5°) gewählt ist.

Bei Regen erzeugt lediglich die "Regenstrecke" ein Signal durch Auskopplung; die "Salzerkennungsstrecke" hingegen zeigt kein Signal. Kommt es im Winter durch ausgebrachtes Salz zu einer Benetzung der Fahrzeugscheibe mit einer Salzlösung, so erzeugt auch die Salzerkennungsstrecke ein Signal. Diese zusätzliche Information kann vorteilhaft verwendet werden, um das Wischersystem so zu steuern, daß der Bildung einer Salzschicht auf der Fahrzeugscheibe vorgebeugt wird.

Die Figur 1 zeigt schematisch den Strahlengang bei einer optoelektronischen Sensoreinrichtung. Um salzhaltige Feuchtigkeit auf einer Fahrzeugscheibe (4) eines Kraftfahrzeugs zu sensieren, strahlt eine als Lichtsender (5) wirkende Sende-Diode eine optische Strahlung, vorzugsweise im nahen Infrarotbereich bei einer Wellenlänge von ca. 880 nm, über ein Koppelelement (1) in das Glas der Fahrzeugscheibe (4) ein. Das Koppelelement (1) ist entweder als Prismenstruktur oder, wie hier dargestellt, durch einen Lichtleiter ausgebildet und mittels einer Koppelschicht (2) mit der Fahrzeugscheibe (4) verbunden. Der Brechungsindex der Koppelschicht (2) ist vorzugsweise so gewählt, daß die Ein- und Auskopplung der Strahlung in die bzw. aus der Fahrzeugscheibe (4) brechungsfrei erfolgt.

Der Einstrahlungswinkel (3) der optischen Strahlung in die Fahrzeugscheibe (4) beträgt hier ca. 65°, gemessen zum Scheibenlot und ist damit speziell zur Erkennung von salzhaltiger Feuchtigkeit auf der Fahrzeugscheibe (4) ausgelegt. Eine vorteilhafte, hier nicht dargestellte, Erweiterung des hier skizzierten Sensors ist leicht dadurch möglich, daß parallel zu der hier dargestellten optischen Strecke einer weitere optische Strecke mit einem Einstrahlungswinkel zwischen 41,8° bis ca. 62,3° angeordnet ist, die zur Erkennung von Feuchtigkeit unabhängig von deren Salzgehalt geeignet ist.

Als besonders vorteilhaft sei hier die Möglichkeit hervorgehoben, Strahlungssender und Strahlungsempfänger in sogenannten "Sidelooker-Gehäusen" zu verwenden, die ihre Hauptstrahlungsrichtung bzw. Hauptempfangsrichtung senkrecht zur Fahrzeugscheibe aufweisen. Derartige Bauelemente sind einfach und kostengünstig montierbar, und bei einem erfindungsgemäßen Sensoraufbau effizient einsetzbar.

An der Außenfläche der Fahrzeugscheibe (4) wird der unter einem Einstrahlungswinkel (3) von 65° auftreffende Lichtstrahl unter einem gleichgroßen Winkel totalreflektiert und fällt über das Koppelelement (1) auf eine als Lichtempfänger (6) wirkende Foto-Diode.

Befindet sich salzhaltige Feuchtigkeit auf der Außenseite der Fahrzeugscheibe (4), so wird an dieser Stelle ein Teil der auftreffenden Strahlung aus der Fahrzeugscheibe (4) ausgekoppelt oder absorbiert, was eine Verminderung der von der Foto-Diode (6) empfangenen Strahlungsintensität bewirkt. Diese Intensitätsänderung kann durch eine mit der Foto-Diode verbundene Elektronik, die in der Figur nicht dargestellt ist, leicht registriert werden.

### Bezugszeichen

1   Koppelelement
2   Koppelschicht
3   Einstrahlungswinkel
4   Fahrzeugscheibe
5   (Licht)sender
6   (Licht)empfänger

a, b, c, d   Winkelbereiche

### Patentansprüche

1.  Optoelektronische Sensoreinrichtung für ein Kraftfahrzeug zur Detektion von Feuchtigkeit auf einer Kraftfahrzeugscheibe (4), mit einer Kraftfahrzeugscheibe (4), mit einem Sender (5) und einem Empfänger (6) für optische Strahlung, welche von der Kraftfahrzeugscheibe (4) in Richtung auf den Empfänger (6) reflektiert wird und mit einem Koppelelement (1) zur Ein- und Auskopplung der optischen Strahlung in die Kraftfahrzeugscheibe (4), wobei die optische Strahlung unter einem Einstrahlungswinkel (3) zwischen 62,3° und 66,5°, gemessen zum Scheibenlot, innerhalb der Kraftfahrzeugscheibe (4) auf die Scheibengrenzfläche trifft, wobei das Glas der Kraftfahrzeugscheibe (4) einen Brechungsindex von 1,50 hat und wobei die vom Empfänger (6) detektierte Intensität der reflektierten optischen Strahlung zur Erkennung einer Benetzung der Kraftfahrzeugscheibe (4) mit einer Salzlösung verwendet wird.

2.  Optoelektronische Sensoreinrichtung nach Anspruch 1, **dadurch gekennzeichnet, daß** das Koppelelement (1) als Lichtleitkörper ausgebildet ist.

3.  Optoelektronische Sensoreinrichtung nach Anspruch 2, **dadurch gekennzeichnet, daß** der Lichtleitkörper zur Ein- und Auskopplung optischer Strahlung eine Prismenstruktur, bestehend aus einer Vielzahl von Prismenflächen aufweist.

4.  Optoelektronische Sensoreinrichtung nach Anspruch 1, **dadurch gekennzeichnet, daß** die Sensoreinrichtung mehrere Sender und/oder mehrere Empfänger für optische Strahlung aufweist.

5.  Optoelektronische Sensoreinrichtung nach Anspruch 1 oder 4, **dadurch gekennzeichnet, daß** die Sensoreinrichtung mehrere Reflexionsstrecken aufweist.

6. Optoelektronische Sensoreinrichtung nach Anspruch 5, **dadurch gekennzeichnet, daß** bei wenigstens einer Reflexionsstrecke die optische Strahlung unter einem Winkel zwischen 41,8° und 62,3°, gemessen zum Scheibenlot, innerhalb der Kraftfahrzeugscheibe auf die Scheibengrenzfläche trifft.

7. Optoelektronische Sensoreinrichtung nach den Ansprüchen 1 und 6, **dadurch gekennzeichnet, daß** die Sensoreinrichtung zwischen einer Benetzung mit Wasser und einer Benetzung mit Salzlösung unterscheiden kann.

8. Optoelektronische Sensoreinrichtung nach einem der Ansprüche 1, 6, oder 7, **dadurch gekennzeichnet, daß** die Sensoreinrichtung eine Vorrichtung zur Steuerung der Scheibenwischer des Kraftfahrzeugs beeinflußt.

9. Optoelektronische Sensoreinrichtung nach Anspruch 8, **dadurch gekennzeichnet, daß** die Sensoreinrichtung bei einer Erkennung einer Salzlösung auf der Kraftfahrzeugscheibe (4) die Vorrichtung zur Steuerung der Scheibenwischer dergestalt beeinflußt, so daß diese die Wischfrequenz und/oder die Wischgeschwindigkeit der Scheibenwischer verändert.

10. Optoelektronische Sensoreinrichtung nach einem der Ansprüche 1, 6, oder 7, **dadurch gekennzeichnet, daß** die Information über die Erkennung von Benetzung mit Wasser oder Salzlösung weiteren Einrichtungen im Kraftfahrzeug übermittelt wird.


**Claims**

1. Optoelectronic sensor device for a motor vehicle intended for detecting wetting on the windscreen (4) of a motor vehicle and comprising the windscreen (4) of a motor vehicle, a transmitter (5) and a receiver (6) for the optical radiance reflected from the windscreen (4) of a motor vehicle in the direction of the receiver (6), and a coupler (1) for incoupling and outcoupling the optical radiance into the windscreen (4) of a motor vehicle, with the optical radiance hitting the boundary area of the windscreen within the windscreen (4) of a motor vehicle at an angle of incidence (3) of between 62.3° and 66.5° measured perpendicular to the windscreen, for which purpose the glass of the windscreen (4) of a motor vehicle has a refractive index of 1.50, and with the intensity of the reflected optical radiance detected by the receiver (6) being used to identify any wetting of the windscreen (4) of a motor vehicle with a saline solution.

2. Optoelectronic sensor device in accordance with Claim 1, **characterised by** the fact that the coupler (1) is designed as a fibre-optic element.

3. Optoelectronic sensor device in accordance with Claim 2, **characterised by** the fact that, for the purpose of incoupling and outcoupling optical radiance, the fibre-optic element features a prismatic structure consisting of a plurality of prismatic surfaces.

4. Optoelectronic sensor device in accordance with Claim 1, **characterised by** the fact that the sensor device features multiple transmitters and/or multiple receivers for optical radiance.

5. Optoelectronic sensor device in accordance with Claims 1 or 4, **characterised by** the fact that the sensor device features multiple reflection paths.

6. Optoelectronic sensor device in accordance with Claim 5, **characterised by** the fact that the optical radiance for at least one reflection path hits the boundary area of the windscreen within the windscreen (4) of a motor vehicle at an angle of between 41.8° and 62.3° measured perpendicular to the windscreen.

7. Optoelectronic sensor device in accordance with Claims 1 and 6, **characterised by** the fact that the sensor device can differentiate between wetting with water and wetting with saline solution.

8. Optoelectronic sensor device in accordance with Claims 1, 6 or 7, **characterised by** the fact that the sensor device influences a facility for controlling the windscreen wiper of the motor vehicle.

9. Optoelectronic sensor device in accordance with Claim 8, **characterised by** the fact that, upon identifying a saline solution on the windscreen (4) of a motor vehicle, the sensor device influences the facility for controlling the windscreen wiper in such a manner that it changes the wiping frequency and/or the wiping speed of the windscreen wiper.

10. Optoelectronic sensor device in accordance with any of Claims 1, 6 or 7, **characterised by** the fact that the information regarding the identification of wetting with water or with saline solution is transmitted to other devices in the motor vehicle.


**Revendications**

1. Système de détection optoélectronique pour un véhicule automobile pour la détection d'humidité sur une glace (4) de véhicule automobile (4), avec une glace (4) de véhicule automobile, avec un émetteur (5) et un récepteur (6) pour un rayonnement optique, qui est réfléchi par la glace (4) de véhicule automobile en direction du récepteur (6), et avec un élément de couplage (1) pour le couplage et le découplage du rayonnement optique dans la glace (4) de véhicule automobile, le rayonnement optique tombant, au sein de la glace (4) de véhicule automobile (4), sur la surface limite de la glace, sous un angle de rayonnement (3), situé entre 62,3° et 66,5°, mesuré par rapport à la perpendiculaire de la glace, le verre de la glace (4) de véhicule automobile ayant un indice de réfraction de 1,50, et l'intensité du rayonnement optique réfléchi, détecté par le récepteur (6), étant utilisée pour la reconnaissance d'un mouillage de la glace (4) de véhicule automobile par une solution saline.

2. Système de détection optoélectronique selon la revendication 1, **caractérisé en ce que** l'élément de couplage (1) est réalisé en tant que corps de guidage de lumière.

3. Système de détection optoélectronique selon la revendication 2, **caractérisé en ce que** le corps de guidage de lumière présente, pour le couplage et le découplage du rayonnement optique, une structure prismatique, consistant en un grand nombre de surface en forme de prismes.

4. Système de détection optoélectronique selon la revendication 1, **caractérisé en ce que** le système de détection présente plusieurs émetteurs et / ou plusieurs récepteurs pour rayonnement optique.

5. Système de détection optoélectronique selon revendication 1 ou 4, **caractérisé en ce que** ledit système de détection présente plusieurs trajectoires de réflexion.

6. Système de détection optoélectronique selon la revendication 5, **caractérisé en ce que**, pour au moins une trajectoire de réflexion, le rayonnement optique tombe, au sein de la glace de véhicule automobile, sur la surface limite de la glace sous un angle situé entre 41,8° et 62,3°, mesuré par rapport à la perpendiculaire de la glace.

7. Système de détection optoélectronique selon les revendications 1 et 6, **caractérisé en ce que** le système de détection peut faire la différence entre un mouillage avec de l'eau et un mouillage avec une solution saline.

8. Système de détection optoélectronique selon l'une des revendications 1, 6 ou 7, **caractérisé en ce que** le système de détection influence un dispositif pour la commande des essuie-glaces du véhicule automobile.

9. Système de détection optoélectronique selon la revendication 8, **caractérisé en ce que** le système de détection, lors de la détection d'une solution saline sur la glace (4) de véhicule automobile, exerce une influence sur le dispositif de commande des essuie-glaces de sorte que celui-ci modifie la fréquence d'essuyage et / ou la vitesse d'essuyage des essuie-glaces.

10. Système de détection optoélectronique selon l'une des revendications 1, 6 ou 7, **caractérisé en ce que** l'information concernant la détection d'un mouillage avec de l'eau ou une solution saline, est transmise à d'autres systèmes dans le véhicule automobile.

Fig. 1

Fig. 2

| Bereich | trocken | Wasser | Salzlösung |
|---------|---------|--------|------------|
| a | A | A | A |
| b | R | A | A |
| c | R | R | A |
| d | R | R | R |

Kraftfahrzeugscheibe

A: Auskopplung
R: Totalreflexion

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 62163949 A

**In der Beschreibung aufgeführte Nicht-Patentliteratur**

- *PATENT ABSTRACTS OF JAPAN,* 07. Januar 1988, vol. 012, 002 (P-652